# EUROPÄISCHE PATENTSCHRIFT

(11) **EP 0 897 317 B1**
(45) Veröffentlichungstag und Bekanntmachung des Hinweises auf die Patenterteilung: **26.07.2000**
(21) Anmeldenummer: 97925844.9
(22) Anmeldetag: 02.05.1997
(51) Int. Cl.: B01D 27/00, B01D 46/52, B01D 29/21, F16L 37/24, F16K 41/10, F16J 15/52, H02G 3/06, E21B 33/04

(54) **ENDSCHEIBE FÜR EIN RINGFILTERELEMENT MIT RADIAL WIRKENDER DICHTUNG**
END DISC FOR AN ANNULAR FILTER ELEMENT WITH A SEAL WHICH ACTS RADIALLY
DISQUE TERMINAL POUR ELEMENT FILTRANT ANNULAIRE A JOINT AGISSANT RADIALEMENT

(30) Priorität: 02.05.1996 DE 19617468
(43) Veröffentlichungstag der Anmeldung: 24.02.1999
(73) Patentinhaber: MAHLE Filtersysteme GmbH, 70376 Stuttgart (DE)
(72) Erfinder: SCHNEIDER, Horst, D-71336 Waiblingen (DE); WAIBEL, Hans, D71686 Remseck/Aldingen (DE)
(74) Vertreter: Patentanwalts-Partnerschaft Rotermund + Pfusch
(86) Internationale Anmeldenummer: DE9700928
(87) Internationale Veröffentlichungsnummer: WO9741939

(56) Entgegenhaltungen:
- EP-A- 0 662 337
- EP-A- 0 733 840
- US-A- 1 840 312
- US-A- 2 356 947
- US-A- 5 484 466

## Beschreibung

Die Erfindung betrifft eine Endscheibe nach dem Oberbegriff des Patentanspruchs 1 sowie eine Endscheibe nach dem Oberbegriff des Patentanspruchs 7.

Bei einer aus DE 43 22 226 bekannten Endscheibe ist die radiale Dichtung durch eine radiale Anlage des Entscheibenmaterials unter elastischer Verspannung gegeben.

Die US 5 484 466 offenbart ein Filterelement mit einer Endscheibe, die eine zackenförmige Dichtung aufweist, deren freies Ende beim Einbringen des Filterelementes in ein Filtergehäuse radial verdrängt wird, wobei die Dichtung durch elastische Vorspannung an eine zylindrischen Anlagefläche am Filtergehäuse dichtet.

Die EP 0 662 337 A2 zeigt ein Filterelement mit einer Endscheibe, die eine wellenförmige Radialdichtung aufweist. Wenn das Filterelement in ein Filtergehäuse eingesetzt ist, liegen Wellenberge der wellenförmigen Dichtung an einer Dichtfläche des Filtergehäuses mit radialer Vorspannung an.

Aus der US 1 840 312 sowie aus der US 2 356 947 sind zickzackförmige Radialdichtungen zwischen einem Rohr und einer Muffe bzw. einer Welle bekannt. Zur Abdichtung der gegenüberliegenden zylindrischen Flächen wird die Radialdichtung axial komprimiert, wodurch die Spitzen der Zick-Zack-Form gegen die abzudichtenden zylindrischen Flächen gepreßt werden.

Die EP 0 733 840 A1 zeigt eine Radialdichtung in Wellenform zwischen einem Ventilschaft und einem Gehäuse. Die elastische Wellenform wird durch das Einsetzen des Ventilschaftes ausgeweitet, wodurch die radiale Dichtkraft erzeugt wird. Hier liegen die Wellenberge einer Seite der Wellendichtung an einer Dichtfläche an.

Bei Beaufschlagung bestimmter Endscheiben-Materialien mit bestimmten zu filternden Medien kann es nach einer längeren Betriebszeit zu einem Setzen des die radiale Dichtung bewirkenden elastisch verspannten Endscheibenmaterials kommen, was eine Abnahme der Dichtwirkung zur Folge hat.

Hier Abhilfe zu schaffen, ist das Problem, mit dem sich die vorliegende Erfindung beschäftigt und das sie mit einer Endscheibenausbildung mit den Merkmalen des Patentanspruchs 1 sowie mit einer Endscheibenausbildung mit den Merkmalen des nebengeordneten Patentanspruchs 7 löst.

Zweckmäßige Ausgestaltungen der Erfindung sind Gegenstand der Unteransprüche.

Die Erfindung beruht auf dem Gedanken, den radialen Dichtbereich der Endscheibe formmäßig so zu gestalten, daß bei der Montage des Filterelementes auf eine zylindrische Anlagefläche des Filtergehäuses eine federnde Verformung des Dichtbereiches erfolgt. Diese federnde Verformung wirkt einem gegebenenfalls während der Betriebszeit erfolgenden Setzen des Endscheibenmaterials ausgleichend entgegen.

In den nachfolgenden Zeichnungen sind Ausführungsbeispiele zum besseren Verständnis der Erfindung dargestellt. Es zeigen, jeweils schematisch,
- Fig. 1: einen Radialschnitt durch einen Endbereich eines erfindungsgemäßen Ringfilterelementes mit einem Ringkragen, der mit einer radial innenliegenden Dichtkante an einem Rohrstutzen anliegt,
- Fig. 2: wie Fig. 1, jedoch mit einem Ringkragen, der mit zwei radial innenliegenden Dichtkanten an einem Rohrstutzen anliegt,
- Fig. 3: wie Fig. 2, jedoch mit einem als separates Bauteil ausgebildeten Ringkragen, und
- Fig. 4: wie Fig. 3, jedoch mit einem Ringkragen, der durch Rastmittel mit dem Endbereich der erfindungsgemäßen Endscheibe verbunden ist.

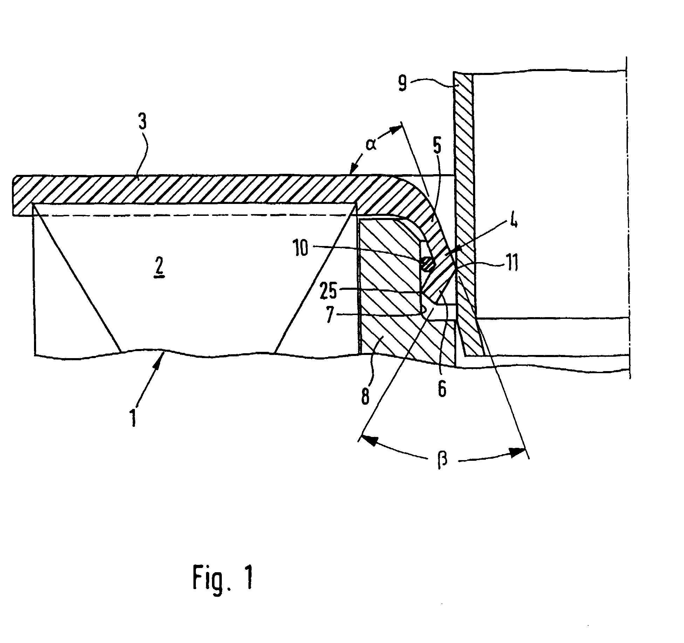

Entsprechend Fig. 1 besteht ein Ringfilterelement 1 aus zu einem Ring geformten zickzackförmig gefalteten Filterpapier 2, das stirnseitig jeweils von einer. Endscheibe 3 aus thermoplastischem Kunststoff dicht abgedeckt ist.

Die mindestens eine in Fig. 1 dargestellte Endscheibe 3 ist ein vorgeformtes Teil, das durch Einplastifizieren mit dem Filterpapier 2 dicht verbunden wird. Die vorgefertigte Endscheibe 3 ist mit einem bezüglich des Ringfilterelementes 1 nach innen abgewinkelten Ringkragen 4 versehen. Dieser Ringkragen 4 besteht in axialer Richtung aus einem ersten Bereich 5 sowie einem zweiten Bereich 6. Der erste Bereich 5 ist abgewinkelt an den ebenen stirnseitigen Bereich der Endscheibe 3 angeformt. Der erste Bereich 5 ist um einen Winkel α von etwa 70 ° aus der Ebene der Endscheibe 3 abgewinkelt. Gegenüber diesem ersten Bereich 5 ist der zweite Bereich 6 des Ringkragens 4 um einen Winkel β von etwa 50 ° abgewinkelt.

Das axial freie Ende des Ringkragens 4 liegt an einer zylindrischen Auflagefläche 7 einer radial innen einen Bestandteil des Ringfilterelementes 1 bildenden Rohrzarge 8 an.

Im Bereich des Neigungswechsels der Bereiche 5 und 6 des Ringkragens 4, das heißt im Knickbereich zwischen den Bereichen 5 und 6, liegt der Ringkragen 4 als Ring etwa linienförmig an einem als Anlagefläche dienenden Rohrstutzen 9 eines Filtergehäuses an, auf den das Filterelement 1 an einer seiner Stirnseiten axial aufgeschoben ist. In einem solchen aufgeschobenen Zustand ist der Ringkragen 4 zum einen radial verspannt, das heißt der in dem Knickbereich der beiden Bereiche 5 und 6 liegende innere Durchmesser des Kragens 4 ist unter Vergrößerung des Neigungswinkels α und Verkleinerung des Neigungswinkels β vergrößert. Bei einer solchen Durchmesservergrößerung verschiebt sich das axial freie Ende des Bereiches 6 auf der Auflagefläche 7 der Rohrzarge 8 in Richtung einer axialen Abstandsvergrößerung gegenüber der stirnseitigen Ebene der Endscheibe 3. Durch die Anlage des axialen Endes des Ringkragens 4 an der Auflagefläche 7 der Rohrzarge 8 bildet sich eine radial wirkende Dichtkante 25 aus, darüber hinaus ist eine radiale Vorspannung des Ringkragens 4 in Bezug auf eine Dichtung über eine Dichtkante 11 an den Stutzen 9 gegeben, die eine betriebsbedingte Setzung des Materials der Endscheibe 3 ausgleichen kann. Eine Materialsetzung kann insbesondere unter dem Einfluß bestimmter zu filternder Flüssigkeiten wie beispielsweise Schmieröl oder Kraftstoff von Verbrennungsmotoren erfolgen.

Vorteilhaft für die Erzielung einer wirksamen Dichtung ist bei der erfindungsgemäßen Formgebung des Ringkragens 4 eine linienförmige Dichtung zwischen dem Ringkragen 4 und dem Rohrstutzen 9 im die Dichtkante 11 bildenden Knickbereich des Ringkragens 4. Die eine Dichtung durch den Ringkragen 4 bewirkende radiale Spannkraft innerhalb des Ringkragens 4 kann noch zusätzlich durch ein zwischen dem Knickbereich des Ringkragens 4 und der Auflagefläche 7 der Rohrzarge 8 eingelegtes radial elastisch wirkendes Element, wie beispielsweise ein radial elastisch verformbarer Ring 10, erhöht werden.

In dem Bereich der zylindrischen Auflagefläche 7 für die Aufnahme des Ringkragens 4 ist bei dieser Ausführungsform die Rohrzarge 8 radial stufenförmig zurückgenommen. Dadurch kann die Rohrzarge 8 in dem verbleibenden radial nicht zurückgenommenen Bereich das Ringfilterelement 1 radial gegenüber dem Stutzen 9 fixieren, wodurch eine radial eindeutige Lage des Ringfilterelementes 1 gewährleistet ist.

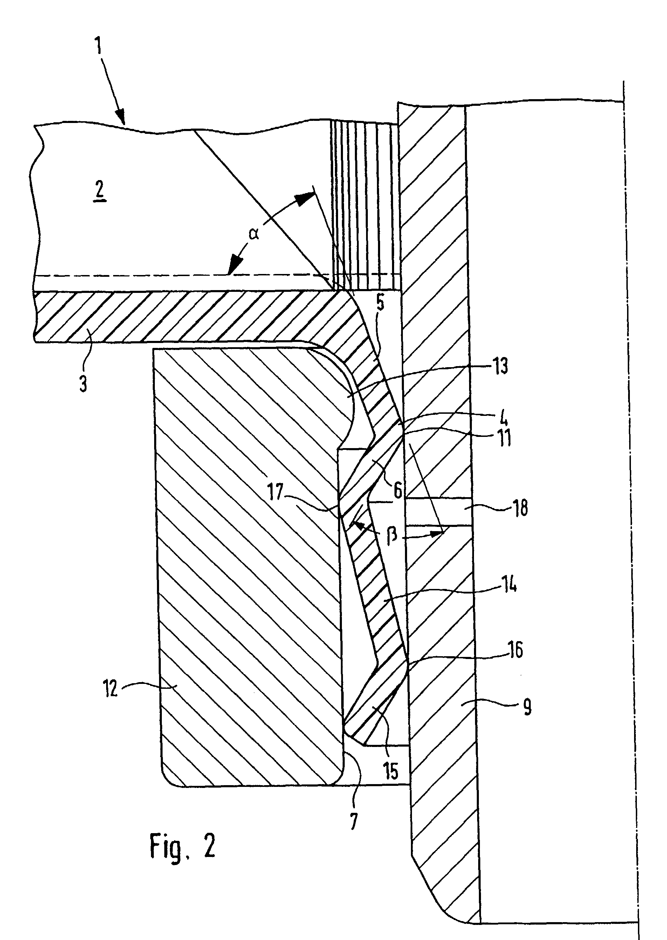

Während Fig. 1 ein Ausführungsbeispiel der Endscheibe 3 nach der Erfindung zeigt, bei dem der Ringkragen 4 bezüglich des Ringfilterelementes 1 innen an der stirnseitigen Ebene der Endscheibe 3 angeordnet ist, zeigt Fig. 2 eine andere Ausführungsform, bei der der Ringkragen 4 bezüglich des Ring-filterelementes 1 außen an der Endscheibe 3 angeordnet ist. Dabei sind in einem Spalt zwischen Filterpapier 2 und Rohrstutzen 9 die innenliegenden Faltkanten des zickzackförmig gefalteten Filterpapiers 2 als vertikale Linien wiedergegeben.

Bei dieser Ausführungsform liegt der von der Anlagefläche 9 wegführend geneigte zweite Bereich 6 mit seinem axialen Ende auf der die Auflagefläche 7 bildenden Innenseite eines separaten, den Ringkragen 4 umfassenden Stützringes 12 auf. Der Stützring 12 weist an seiner der Endscheibe 3 zugewandten Stirnseite einen umlaufenden Wulst 13 auf, der in den Freiraum zwischen Stützring 12 und dem Knickbereich des ersten Bereiches 5 und des zweiten Bereiches 6 hineinragt. Die so gebildete Rastverbindung zwischen Stützring 12 und Ringkragen 4 sichert den Stützring 12 in dieser den Ringkragen 4 radial außen unterstützenden Position.

An das auf der Auflagefläche 7 des Stützringes 12 aufliegenden Ende des zweiten Bereiches 6 des Ringkragens 4 grenzt ein dritter Bereich 14, der in etwa wie der erste Bereich 5 mit dem Winkel α gegenüber der Ebene der Endscheibe 3 geneigt bis zum Rohrstutzen 9 verläuft. Daran schließt sich ein vierter Bereich 15 an, der etwa wie der zweite Bereich 6 mit dem Winkel β gegenüber dem dritten Bereich 14 von der Anlagefläche am Stutzen 9 weggeneigt ist und mit seinem axial freien Ende auf der Auflagefläche 7 am Stützring 12 endet.

Der am Stutzen 9 anliegende Bereich des Neigungswechsels zwischen dem dritten Bereich 14 und dem vierten Bereich 15 bildet eine radial gegenüber der Anlagefläche des Stutzens 9 wirkende Dichtkante 16. Ebenso kann der auf der Auflagefläche 7 aufliegende Bereich des Neigungswechsels zwischen dem zweiten Bereich 6 und dem dritten Bereich 14 eine radial gegenüber dem Stützring 12 wirkende Dichtkante 17 bilden.

Die kreislinienförmig um den Stutzen 9 umlaufenden Dichtkanten 11 und 16 verlaufen in axialer Richtung beiderseits einer in den Rohrstutzen 9 eingebrachten radial verlaufenden Leerlaufbohrung 18. Eine derartige Leerlaufbohrung 18 wird benötigt, um beim Auswechseln des Ringfilterelements 1 das Filtergehäuse möglichst weitgehend von der darin enthaltenen Flüssigkeit, beispielsweise Schmieröl oder Kraftstoff von Verbrennungsmotoren, zu entleeren. Um das Filtern durchführen zu können, muß jedoch diese Leerlaufbohrung 18 im eingebauten Zustand des Ringfilterelementes 1 abgedichtet sein. Dies wird durch die die Leerlaufbohrung 18 einschließenden Dichtkanten 11 und 16 des Ringkragens 4 der erfindungsgemäßen Endscheibe 3 ermöglicht.

Wie in dem in Fig. 1 beschriebenen Ausführungsbeispiel wird auch der Ringkragen 4 der Ausführungsform entsprechend Fig. 2 beim axialen Aufschieben auf den Stutzen 9 des Filtergehäuses radial verspannt. Dabei wird in diesem Fall sowohl der Innendurchmesser an der Dichtkante 11 zwischen dem ersten und zweiten Bereich 5 und 6 als auch an der Dichtkante 16 des dritten und vierten Bereiches 14 und 15 vergrößert. Durch die so erzielte radiale Vorspannung der Dichtkanten 11 und 16 gegenüber der Anlagefläche 9 können betriebsbedingte Setz-Vorgänge im Material der Endscheibe 3 ausgeglichen werden. Darüber hinaus wird durch die erzwungene Durchmesservergrößerung nunmehr in zwei Knickbereichen die Vorspannkraft erhöht und die Dichtwirkung verbessert.

Das axial freie Ende des vierten Bereiches 15 ist gegenüber der Auflagefläche 7 des Stützringes 12 abgerundet, damit es besser daran in axialer Richtung gleitend verschiebbar ist.

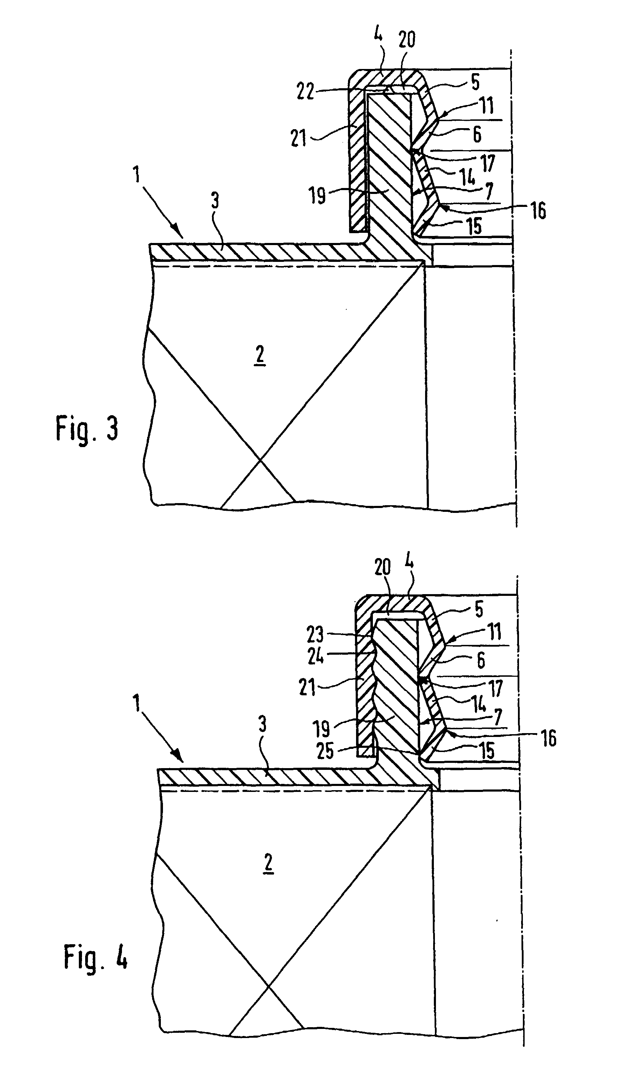

Die in den Fig. 3 und 4 dargestellten Ausführungsbeispiele entsprechen einem anderen erfindungsgemäßen Lösungsprinzip, da der die Abdichtung bewirkende Ringkragen 4 als separates Bauteil ausgebildet ist. Dabei ist entsprechend Fig. 3 auf die mit dem Filterpapier 2 verbundene Endscheibe 3 ein bezüglich des Ringfilterelementes 1 nach außen axial abstehender zylindrischer Stützkragen 19 angeformt. Auf den Stützkragen 19 ist der als separates Bauteil ausgebildete Ringkragen 4 aufgesetzt, der unter Ausbildung eines den Stützkragen 19 aufnehmenden Zwischenraumes 20, mit einer im wesentlichen parallel zum Ringkragen 4 verlaufenden zylindrischen Hülse 21 verbunden ist.

Als Auflagefläche 7 für die Dichtkante 17 des zweiten und dritten Bereiches 6 und 14 und für das axial freie Ende des vierten Bereiches 15 dient in dieser Ausführungsform die Außenseite des Stützkragens 19. Die Funktionsweise, insbesondere die Verspannung des Ringkragens 4 zur Erzeugung der erfindungsgemäßen Vorspannung, entspricht derjenigen, die zu den Figuren 1 und 2 beschrieben worden ist.

Entsprechend Fig. 3 ist das aus Hülse 21 und Ringkragen 4 bestehende einheitliche, von der Endscheibe 3 separate Bauteil an der Stelle 22 im Zwischenraum 20 durch Verschweißen, insbesondere durch Ultraschallverschweißen am Stützkragen 19 und somit an der Endscheibe 3 befestigt.

Im Unterschied dazu ist bei der Ausgestaltung entsprechend Fig. 4 das aus Hülse 21 und Ringkragen 4 gebildete separate Bauteil mit Hilfe einer Rastverbindung an der Endscheibe 3 befestigt. Dazu weist die Hülse 21 auf ihrer dem Zwischenraum 20 zugewandten Seite mehrere umlaufende Sitzrillen 23 auf, die mit korrespondierenden Rillen 24 auf der gegenüberliegenden Seite des Stützkragens 19 zusammenwirken. Durch den Andruck der Dichtkante 17 und des axial freien Endes des Bereiches 15 an der Auflagefläche 7 des Stützkragens 19 werden die zusammenwirkenden Rillen 23 und 24 in ihre Eingriffsposition vorgespannt, so daß eine gesicherte Verbindung des Ringkragens 4 mit dem Stützkragen 19 bzw. der Endscheibe 3 gewährleistet ist. Die Verwendung einer Rastverbindung, die in Fig. 2 zwischen dem Stützring 12 und dem Ringkragen 4 beschrieben wurde, ist in entsprechender Weise möglich.

Für die Ausführungsbeispiele der Fig. 3 und 4 ist die Dichtkante 17 von besonderer Bedeutung, da in diesen Varianten der die Abdichtung gegenüber der Anlagefläche 9 bewirkende Ringkragen 4 ein separates Bauteil ist und demnach auch eine Abdichtung gegenüber der Endscheibe 3 erforderlich ist. Bei der Schweißverbindung des Ringkragens 4 mit der Endscheibe 3 entsprechend Fig. 3 wird diese Abdichtung durch die Schweißstelle 22 gewährleistet. Jedoch kann die Rastverbindung 23, 24 entsprechend Fig. 4 diese Abdichtung nicht in ausreichendem Maße gewährleisten, so daß in diesem Fall eine zusätzliche Dichtung, wie beispielsweise durch die Dichtkante 17, notwendig ist. Ebenso kann auch das auf der Auflagefläche 7 aufliegende axial freie Ende des vierten Bereiches 15 eine Dichtkante 25 bilden.

## Patentansprüche

1. Endscheibe aus elastischem Kunststoff an einem radial durchströmten, austauschbar in ein Filtergehäuse einsetzbaren Ring-Filterelement, die bei in das Filtergehäuse eingesetztem Ring-Filterelement radial innen oder außen als radial wirkende und axial verschiebbare Dichtung gegenüber einer zylindrischen Anlagefläche des Filtergehäuses ausgebildet ist, insbesondere für ein Öl- oder Kraftstoffilter vorzugsweise eines Kraftfahrzeuges, wobei die radial wirkende Dichtung ein an der Endscheibe angeordneter Ringkragen ist, der sich von der stirnseitigen Ebene der Endscheibe im wesentlichen axial erstreckt,
**dadurch gekennzeichnet,**
- daß der Ringkragen (4) entlang seiner axialen Erstreckung wenigstens zwei unterschiedlich gegenüber der stirnseitigen Ebene der Endscheibe (3) geneigte Bereiche (5, 6) besitzt, von denen ein an die stirnseitige Ebene der Endscheibe (3) angrenzender erster Bereich (5) zur jeweiligen Anlagefläche (9) des Filtergehäuses hinführend und ein daran angrenzender zweiter Bereich (6) von der Anlagefläche (9) wegführend geneigt ist, wobei der Ringkragen (4) im Bereich des Neigungswechsels des ersten und zweiten Bereiches eine an der Anlagefläche (9) des Filtergehäuses anliegende Dichtlippe bzw. Dichtkante (11) bildet,
- daß das axial freie Ende des geneigten Bereiches (6) am freien Ende des Ringkragens (4) axial verschiebbar an einer zylindrischen Auflagefläche (7) radial anliegt, und
- daß der Ringkragen (4) der Endscheibe (3) durch sein Anliegen an der Anlagefläche (9) des Filtergehäuses und an der zylindrischen Auflagefläche (7) radial verspannt ist.

2. Endscheibe nach Anspruch 1,
**dadurch gekennzeichnet,**
daß der Ringkragen (4) bezüglich des Ring-Filterelementes (1) innen an der stirnseitigen Ebene der Endscheibe (3) angeordnet ist.

3. Endscheibe nach Anspruch 2,
**dadurch gekennzeichnet,**
daß die zylindrische Auflagefläche (7) für das axiale freie Ende des Ringkragens (4) der Endscheibe (3) eine am Ring-Filterelement (1) angeordnete, das Filtermaterial radial innen bzw. radial außen begrenzende Rohrzarge (8) ist.

4. Endscheibe nach Anspruch 3,
**dadurch gekennzeichnet,**
daß die von der Rohrzarge (8) gebildete Auflagefläche (7) ein radial zurückgenommener Bereich ist.

5. Endscheibe nach Anspruch 1,
**dadurch gekennzeichnet,**
daß die zylindrische Auflagefläche (7) für das axiale freie Ende des Ringkragens (4) der Endscheibe (3) ein den Ringkragen (4) radial innen bzw. radial außen begrenzender, separater Stützring (12) ist.

6. Endscheibe nach Anspruch 5,
**dadurch gekennzeichnet,**
daß der Stützring (12) mit dem Ringkragen (4) verrastbar ist, wobei der Stützring (12) einen radial abstehenden Wulst (13) aufweist, der im eingerasteten Zustand in den zwischen dem Stützring (12) und dem Bereich des Neigungswechsels des ersten und zweiten Bereiches (5) und (6) ausgebildeten Freiraum eingreift.

7. Endscheibe aus Kunststoff an einem radial durchströmten, austauschbar in ein Filtergehäuse einsetzbaren Ring-Filterelement, die bei in das Filtergehäuse eingesetztem Ring-Filterelement radial innen oder außen als radial wirkende und axial verschiebbare Dichtung gegenüber einer zylindrischen Anlagefläche des Filtergehäuses ausgebildet ist, insbesondere für ein Öl- oder Kraftstoffilter vorzugsweise eines Kraftfahrzeuges, wobei die radial wirkende Dichtung ein an der Endscheibe angeordneter Ringkragen ist, der sich von der stirnseitigen Ebene der Endscheibe im wesentlichen axial erstreckt,
**dadurch gekennzeichnet,**
- daß der Ringkragen (4) und die Endscheibe (3) als separate Bauteile ausgebildet sind, wobei der Ringkragen (4) aus elastischem Material besteht und unter Ausbildung eines einseitig offenen Zwischenraumes (20) mit einer sich parallel zum Ringkragen (4) erstreckenden Hülse (21) verbunden ist,
- daß der Ringkragen (4) entlang seiner axialen Erstreckung wenigstens zwei unterschiedlich gegenüber der stirnseitigen Ebene der Endscheibe (3) geneigte Bereiche (5, 6) besitzt, von denen ein an die Hülse (21) angrenzender erster Bereich (5) zur jeweiligen Anlagefläche (9) des Filtergehäuses hinführend und ein daran angrenzender zweiter Bereich (6) von der Anlagefläche (9) wegführend geneigt ist, wobei der Ringkragen (4) im Bereich des Neigungswechsels des ersten und zweiten Bereiches eine an der Anlagefläche (9) des Filtergehäuses anliegende Dichtlippe bzw. Dichtkante (11) bildet,
- daß an der Endscheibe (3) ein axial abstehender Stützkragen (19) angeformt ist, der in den Zwischenraum (20) zwischen Hülse (21) und Ringkragen (4) einführbar ist, wobei das axial freie Ende des geneigten Bereiches (6) am freien Ende des Ringkragens (4) axial verschiebbar an einer zylindrischen Auflagefläche (7) am Stützkragen (19) radial anliegt, und
- daß der Ringkragen (4) der Endscheibe (3) durch sein Anliegen an der Anlagefläche (9) des Filtergehäuses und am Stützkragen (19) radial verspannt ist.

8. Endscheibe nach Anspruch 7,
**dadurch gekennzeichnet,**
daß der Ringkragen (4) mit dem Stützkragen (19) durch Verschweißen, insbesondere Ultraschallverschweißen, der Hülse (21) mit dem Stützkragen (19) verbunden ist.

9. Endscheibe nach Anspruch 7,
**dadurch gekennzeichnet,**
daß der Ringkragen (4) mit dem Stützkragen (19) durch Einrasten der Hülse (21) am Stützkragen (19) verbunden ist, wobei auf der Innenseite der Hülse (21) Sitzrillen (23) vorgesehen sind, die mit korrespondierenden Sitzrillen (24) am Stützkragen (19) zusammenwirken.

10. Endscheibe nach einem der Ansprüche 1, 5 bis 9,
**dadurch gekennzeichnet,**
daß der Ringkragen (4) bezüglich des Ring-Filterelementes (1) außen an der stirnseitigen Ebene der Endscheibe (3) angeordnet ist.

11. Endscheibe nach einem der vorhergehenden Ansprüche,
**dadurch gekennzeichnet,**
daß ein an den zweiten Bereich (6) angrenzender, zur Anlagefläche (9) hinführend geneigter dritter Bereich (14) und ein daran angrenzender, von der Anlagefläche (9) wegführend geneigter vierter Bereich (15) vorgesehen sind, wobei der Ringkragen (4) im Bereich des Neigungswechsels des dritten und vierten Bereiches eine an der Anlagefläche (9) des Filtergehäuses anliegende Dichtlippe bzw. Dichtkante (16) bildet.

12. Endscheibe nach Anspruch 11,
**dadurch gekennzeichnet,**
daß der Ringkragen (4) im Bereich des Neigungswechsels des zweiten und dritten Bereiches (6) und (14) eine an der zylindrischen Auflagefläche (7) anliegende Dichtlippe bzw. Dichtkante (17) bildet.

13. Endscheibe nach Anspruch 11 oder 12,
**dadurch gekennzeichnet,**
daß der axiale Abstand zwischen der durch den Neigungswechsel des ersten und zweiten Bereichs (5) und (6) gebildeten Dichtkante (11) und der durch den Neigungswechsel des dritten und vierten Bereichs (14) und (15) gebildeten Dichtkante (16) derart bemessen ist, daß diese Dichtkanten (11) und (16) beiderseits einer in der Anlagefläche (9) des Filtergehäuses eingebrachten Öffnung, insbesondere einer Leerlaufbohrung (18), an der Anlagefläche (9) des Filtergehäuses anliegen.

14. Endscheibe nach einem der vorhergehenden Ansprüche,
**dadurch gekennzeichnet,**
daß das auf der Auflagefläche (7) aufliegende axial freie Ende des Ringkragens (4) eine Dichtlippe bzw. Dichtkante (25) bildet.

15. Endscheibe nach einem der vorhergehenden Ansprüche,
**dadurch gekennzeichnet,**
daß die durch die Neigungswechsel ausgebildete(n) Dichtkante(n) (11, 16, 17, 25) etwa linienförmig an der (jeweils) zugeordneten Fläche (7, 9) anliegt (anliegen).

16. Endscheibe nach einem der vorhergehenden Ansprüche,
**dadurch gekennzeichnet,**
daß ein in dem Bereich des Neigungswechsels des Ringkragens (4) zwischen dem Ringkragen (4) und der zylindrischen Auflagefläche (7) des Ring-Filterelementes (1) vorhandener Freiraum durch ein radial elastisch nachgiebiges Element (10) ausgefüllt ist.

## Claims

1. End disc of elastic plastics material on a radially permeated annular filter element which can be inserted interchangeably into a filter casing and, when the annular filter element is inserted into the filter casing, is designed radially internally or externally as a radially acting, axially displaceable seal against a cylindrical contact face of the filter casing, in particular for an oil or fuel filter, preferably of a motor vehicle, wherein the radially acting seal is an annular collar which is arranged on the end disc and extends substantially axially from the frontal plane of the end disc, characterised in that the annular collar (4), along its axial span, possesses at least two regions (5, 6) which are inclined differently to the frontal plane of the end disc (3) and of which a first region (5) adjoining the frontal plane of the end disc (3) is inclined toward the respective contact face (9) of the filter casing and an adjoining second region (6) is inclined away from the contact face (9), wherein the annular collar (4) forms a sealing lip or sealing edge (11) resting on the contact face (9) of the filter casing in the region of the change of inclination of the first and second region, in that the axially free end of the inclined region (6) at the free end of the annular collar (4) rests radially in an axially displaceable manner on a cylindrical support face (9), and in that the annular collar (4) of the end disc (3) is radially braced by resting on the contact face (9) of the filter casing and on the cylindrical support face (7).

2. End disc according to claim 1, characterised in that the annular collar (4) is arranged internally on the frontal plane of the end disc (3) with respect to the annular filter element (1).

3. End disc according to claim 2, characterised in that the cylindrical support face (7) for the axial free end of the annular collar (4) of the end disc (3) is a pipe body (8) arranged on the annular filter element (1) and limiting the filter material radially internally and radially externally.

4. End disc according to claim 3, characterised in that the support face (7) formed by the pipe body (8) is a radially offset region.

5. End disc according to claim 1, characterised in that the cylindrical support face (7) for the axial free end of the annular collar (4) of the end disc (3) is a separate supporting ring (12) limiting the annular collar (4) radially internally or radially externally.

6. End disc according to claim 5, characterised in that the supporting ring (12) can be interlocked with the annular collar (4), the supporting ring (12) comprising a radially projecting bead (13) which engages in the space formed between the supporting ring (12) and the region of the change of inclination of the first and second region (5) and (6), when interlocked.

7. End disc made of plastics material on a radially permeated annular filter element which can be inserted interchangeably into a filter casing and, when the annular filter element is inserted into the filter casing, is designed radially internally or externally as a radially acting, axially displaceable seal against a cylindrical contact face of the filter casing, in particular for an oil or fuel filter, preferably of a motor vehicle, wherein the radially acting seal is an annular collar which is arranged on the end disc and extends substantially axially from the frontal plane of the end disc, characterised in that the annular collar (4) and the end disc (3) are designed as separate components, wherein the annular collar (4) consists of elastic material and is connected to a sleeve (21) extending parallel to the annular collar (4) to form a space (20) which is open on one side, in that the annular collar (4), along its axial span, possesses at least two regions (5, 6) which are inclined differently to the frontal plane of the end disc (3) of which a first region (5) adjoining the sleeve (21) is inclined toward the respective contact face (9) of the filter casing and an adjoining second region (6) is inclined away from the contact face (9), wherein the annular collar (4) forms a sealing lip or sealing edge (11) resting on the contact face (9) of the filter casing in the region of the change of inclination of the first and second region, in that an axially projecting supporting collar (19) which can be introduced into the space (20) between sleeve (21) and annular collar (4) is shaped on the end disc (3), wherein the axially free end of the inclined region (6) at the free end of the annular collar (4) rests radially in an axially displaceable manner on a cylindrical support face (7) on the supporting collar (19), and in that the annular collar (4) of the end disc (3) is radially braced by resting on the contact face (9) of the filter casing and on the supporting collar (19).

8. End disc according to claim 7, characterised in that the annular collar (4) is connected to the supporting collar (19) by welding, in particular ultrasonic welding, of the sleeve (21) to the supporting collar (19).

9. End disc according to claim 7, characterised in that the annular collar (4) is connected to the supporting collar (19) by interlocking of the sleeve (21) on the supporting collar (19), seating furrows (23) which interact with corresponding seating furrows (24) on the supporting collar (19) being provided on the interior of the sleeve (21).

10. End disc according to one of claims 1, 5 to 9, characterised in that the annular collar (4) is arranged externally on the frontal plane of the end disc (3) with respect to the annular filter element (1).

11. End disc according to one of the preceding claims, characterised in that a third region (14) which adjoins the second region (2) and is inclined toward the contact face (9) and an adjoining fourth region (15) inclined away from the contact face (9) are provided, wherein the annular collar (4) forms a sealing lip or sealing edge (16) resting on the contact face (9) of the filter casing in the region of the change of inclination of the third and fourth region.

12. End disc according to claim 11, characterised in that the annular collar (4) forms a sealing lip or sealing edge (17) resting on the cylindrical support face (7) in the region of the change of inclination of the second and third region (6) and (14).

13. End disc according to claim 11 or 12, characterised in that the axial spacing between the sealing edge (11) formed by the change of inclination of the first and second region (5) and (6) and the sealing edge (16) formed by the change of inclination of the third and fourth region (14) and (15) is so dimensioned that these sealing edges (11) and (16) rest on the contact face (9) of the filter casing on either side of an orifice introduced in the contact face (9) of the filter casing, in particular an idling bore (18).

14. End disc according to one of the preceding claims, characterised in that the axially free end of the annular collar (4) resting on the support face (7) forms a sealing lip or sealing edge (25).

15. End disc according to one of the preceding claims, characterised in that the sealing edge(s) (11, 16, 17, 25) formed by the change of inclination rests (rest) roughly linearly on the (respectively) associated face (7, 9).

16. End disc according to one of the preceding claims, characterised in that a space provided between the annular collar (4) and the cylindrical support face (7) of the annular filter element (1) in the region of the change of inclination of the annular collar (4) is filled by a radially elastically flexible element (10).

## Revendications

1. Disque terminal en matière plastique élastique placé sur un élément filtrant annulaire remplaçable se montant dans un boîtier de filtre et traversé radialement, qui, lorsque l'élément filtrant annulaire est monté dans le boîtier de filtre, constitue radialement intérieurement ou extérieurement un joint d'étanchéité agissant radialement et mobile axialement vis-à-vis d'une surface d'appui cylindrique du boîtier de filtre, en particulier pour un filtre à huile ou à carburant de préférence d'un véhicule automobile, le joint d'étanchéité agissant radialement étant une collerette annulaire placée sur le disque terminal qui s'étend sensiblement axialement à partir du plan frontal du disque terminal, caractérisé par le fait
- que la collerette annulaire (4) a le long de son étendue axiale au moins deux parties (5, 6) inclinées différemment par rapport au plan frontal du disque terminal (3), dont une première (5), contiguë au plan frontal du disque terminal (3), est inclinée de façon à aller à la surface d'appui (9) du boîtier de filtre et une deuxième (6), contiguë à la première, est inclinée de façon à s'éloigner de la surface d'appui (9), la collerette annulaire (4) formant dans la zone du changement d'inclinaison des première et deuxième parties une lèvre d'étanchéité ou une arête d'étanchéité (11) appuyée sur la surface d'appui (9) du boîtier de filtre,
- que l'extrémité libre axiale de la partie inclinée (6) située à l'extrémité libre de la collerette annulaire (4) s'appuie radialement, mobile axialement, sur une surface d'appui cylindrique (4), et
- que le collerette annulaire (4) du disque terminal (3) est contrainte radialement par son appui sur la surface d'appui (9) du boîtier de filtre et sur la surface d'appui cylindrique (7).

2. Disque terminal selon la revendication 1, caractérisé par le fait que la collerette annulaire (4) est placée intérieurement par rapport à l'élément filtrant annulaire (1) sur le plan frontal du disque terminal (3).

3. Disque terminal selon la revendication 2, caractérisé par le fait que la surface d'appui cylindrique (7) pour l'extrémité libre axiale de la collerette annulaire (4) du disque terminal (3) est un corps tubulaire (8) placé sur l'élément filtrant annulaire (1) et limitant radialement intérieurement ou radialement extérieurement la matière filtrante.

4. Disque terminal selon la revendication 3, caractérisé par le fait que la surface d'appui (7) formée par le corps tubulaire (8) est une zone rentrée radialement.

5. Disque terminal selon la revendication 1, caractérisé par le fait que la surface d'appui cylindrique (7) pour l'extrémité libre axiale de la collerette annulaire (4) du disque terminal (3) est un anneau d'appui séparé (12) qui borde radialement intérieurement ou radialement extérieurement la collerette annulaire (4).

6. Disque terminal selon la revendication 5, caractérisé par le fait que l'anneau d'appui (12) peut s'encliqueter avec la collerette annulaire (4), l'anneau d'appui (12) présentant un bourrelet saillant radialement (13) qui, à l'état encliqueté, est engagé dans l'espace libre formé entre l'anneau d'appui (12) et la zone du changement d'inclinaison des première et deuxième parties (5, 6).

7. Disque terminal en matière plastique placé sur un élément filtrant annulaire remplaçable se montant dans un boîtier de filtre et traversé radialement, qui, lorsque l'élément filtrant annulaire est monté dans le boîtier de filtre, constitue radialement intérieurement ou extérieurement un joint d'étanchéité agissant radialement et mobile axialement vis-à-vis d'une surface d'appui cylindrique du boîtier de filtre, en particulier pour un filtre à huile ou à carburant de préférence d'un véhicule automobile, le joint d'étanchéité agissant radialement étant une collerette annulaire placée sur le disque terminal qui s'étend sensiblement axialement à partir du plan frontal du disque terminal,
caractérisé par le fait
- que la collerette annulaire (4) et le disque terminal (3) sont des éléments séparés, la collerette annulaire (4) étant constituée d'une matière élastique et jointe, avec formation d'un intervalle ouvert d'un côté (20), à une douille (21) qui s'étend parallèlement à la collerette annulaire (4),
- que la collerette annulaire (4) a le long de son étendue axiale au moins deux parties (5, 6) inclinées différemment par rapport au plan frontal du disque terminal (3), dont une première (5), contiguë à la douille (21), est inclinée de façon à aller à la surface d'appui (9) du boîtier de filtre et une deuxième (6), contiguë à la première, est inclinée de façon à s'éloigner de la surface d'appui (9), la collerette annulaire (4) formant dans la zone du changement d'inclinaison des première et deuxième parties une lèvre d'étanchéité ou une arête d'étanchéité (11) qui s'appuie sur la surface d'appui (9) du boîtier de filtre,
- que sur le disque terminal (3) est faite une collerette d'appui saillant axialement (19) qui peut être introduite dans l'intervalle (20) entre la douille (21) et la collerette annulaire (4), l'extrémité libre axiale de la partie inclinée (6) située à l'extrémité libre de la collerette annulaire (4) s'appuyant radialement, mobile axialement, sur une surface d'appui cylindrique (7) de la collerette d'appui (19), et
- que la collerette annulaire (4) du disque terminal (3) est contrainte radialement par son appui sur la surface d'appui (9) du boîtier de filtre et sur la collerette d'appui (19).

8. Disque terminal selon la revendication 7, caractérisé par le fait que la collerette annulaire (4) est jointe à la collerette d'appui (19) par soudage, en particulier soudage par ultrasons, de la douille (21) à la collerette d'appui (19).

9. Disque terminal selon la revendication 7, caractérisé par le fait que la collerette annulaire (4) est jointe à la collerette d'appui (19) par encliquetage de la douille (21) sur la collerette d'appui (19), sur la face intérieure de la douille (21) étant prévues des gorges (23) qui coopèrent avec des gorges correspondantes (24) faites sur la collerette d'appui (19).

10. Disque terminal selon l'une des revendications 1 et 5 à 9, caractérisé par le fait que la collerette annulaire (4) est placée extérieurement par rapport à l'élément filtrant annulaire (1) sur le plan frontal du disque terminal (3).

11. Disque terminal selon l'une des revendications précédentes, caractérisé par le fait qu'il est prévu une troisième partie (14) contiguë à la deuxième partie (6) et inclinée de façon à aller à la surface d'appui (9) et une quatrième partie (15) contiguë à la troisième et inclinée de façon à s'éloigner de la surface d'appui (9), la collerette annulaire (4) formant dans la zone du changement d'inclinaison des troisième et quatrième parties une lèvre d'étanchéité ou une arête d'étanchéité (16) qui s'appuie sur la surface d'appui (9) du boîtier de filtre.

12. Disque terminal selon la revendication 11, caractérisé par le fait que la collerette annulaire (4) forme dans la zone du changement d'inclinaison des deuxième et troisième parties (6, 14) une lèvre d'étanchéité ou une arête d'étanchéité (17) qui s'appuie sur la surface d'appui cylindrique (7).

13. Disque terminal selon l'une des revendications 11 et 12, caractérisé par le fait que la distance axiale entre l'arête d'étanchéité (11) formée par le changement d'inclinaison des première et deuxième parties (5, 6) et l'arête d'étanchéité (16) formée par le changement d'inclinaison des troisième et quatrième parties (14, 15) est telle que ces arêtes d'étanchéité (11, 16) s'appuient sur la surface d'appui (9) du boîtier de filtre de part et d'autre d'une ouverture, en particulier d'un trou de marche à vide (18), faite dans cette surface (9).

14. Disque terminal selon l'une des revendications précédentes, caractérisé par le fait que l'extrémité libre axiale de la collerette annulaire (4) qui s'appuie sur la surface d'appui (7) forme une lèvre d'étanchéité ou une arête d'étanchéité (11).

15. Disque terminal selon l'une des revendications précédentes, caractérisé par le fait que les arêtes d'étanchéité (11, 16, 17, 25) formées par les changements d'inclinaison s'appuient à peu près linéairement sur la surface associée (7, 9).

16. Disque terminal selon l'une des revendications précédentes, caractérisé par le fait qu'un espace libre existant dans la zone du changement d'inclinaison de la collerette annulaire (4) entre cette dernière et la surface d'appui cylindrique (7) de l'élément filtrant annulaire (1) est rempli par un élément cédant élastiquement radialement (10).
